# EUROPÄISCHE PATENTSCHRIFT

(11) **EP 1 654 480 B1**
(45) Veröffentlichungstag und Bekanntmachung des Hinweises auf die Patenterteilung: **20.04.2011**
(21) Anmeldenummer: 04763374.8
(22) Anmeldetag: 21.07.2004
(51) Int. Cl.: F16H 7/12

(54) **ZUGMITTELTRIEB**
POWER TRANSMISSION DRIVE
ENTRAINEMENT PAR MECANISME DE TRACTION

(30) Priorität: 13.08.2003 DE 10337222
(43) Veröffentlichungstag der Anmeldung: 10.05.2006
(73) Patentinhaber: Schaeffler Technologies GmbH & Co. KG, 91074 Herzogenaurach (DE)
(72) Erfinder: HÄNSEL, Tino, 91448 Emskirchen (DE)
(86) Internationale Anmeldenummer: PCT/EP2004/008138
(87) Internationale Veröffentlichungsnummer: WO 2005/019695

(56) Entgegenhaltungen:
- EP-A- 0 814 246
- DE-A- 4 309 548
- DE-A- 10 155 199
- DE-A- 10 159 072
- FR-A- 2 832 200
- US-A- 3 415 238
- US-A- 5 733 214
- PATENT ABSTRACTS OF JAPAN Bd. 0120, Nr. 21 (M-661), 22. Januar 1988 (1988-01-22) & JP 62 180157 A (TOYOTA MOTOR CORP), 7. August 1987 (1987-08-07)
- PATENT ABSTRACTS OF JAPAN Bd. 0170, Nr. 27 (M-1355), 19. Januar 1993 (1993-01-19) & JP 4 252823 A (MAZDA MOTOR CORP), 8. September 1992 (1992-09-08)

## Beschreibung

### Gebiet der Erfindung

Die Erfindung betrifft eine Einrichtung, mit dem eine Schwingwinkelabweichung oder eine Verdrehwinkelabweichung zwischen einem Abtriebsorgan und einem Antriebsorgan oder deren Sekundärwirkung auf die Antriebswelle in einem als Synchrontrieb ausgelegten Zugmitteltrieb erfasst werden kann. Dabei wirkt das Abtriebsorgan oder das Antriebsorgan des Zugmitteltriebs beispielsweise mit einer elektronischen Steuerung der Brennkraftmaschine zusammen.

### Hintergrund der Erfindung

Zugmitteltriebe, die beispielsweise von einer mit der Kurbelwelle der Brennkraftmaschine in Verbindung stehenden Riemenscheibe angetrieben werden, sind der funktionsbedingten, durch den Verbrennungsprozess der Brennkraftmaschine ausgelösten Drehungleichförmigkeit ausgesetzt. Die Drehungleichförmigkeit der Brennkraftmaschine leitet Wechseldrehmomente in den Zugmitteltrieb, verbunden mit Beschleunigungs- und Verzögerungsphasen der Winkelgeschwindigkeit, die unmittelbar auf die mit dem Zugmitteltrieb in Verbindung stehenden Aggregate übertragen werden. Dabei entstehen Zugmittelschwingungen, verbunden mit einer nachteiligen Geräuschquelle und einem erhöhten Verschleiß. Bei Zugmitteltrieben, die zum Antrieb von Aggregaten mit großen Drehmassen vorgesehen sind, beispielsweise Generatoren, Klimakompressoren oder Pumpen, verstärkt sich dieser Effekt, und führt insbesondere zu einem kurzen Lebensdauer des Zugmittels. In Zugmitteltrieben, die zum Antrieb der Nockenwellen einer Brennkraftmaschine, bestimmt sind und die als Steuertrieb bezeichnet werden, wird das Zugmittel zusätzlich durch Wechselmomente des Ventiltriebs, d. h. der Betätigung der Gaswechselventile beaufschlagt.

Aus der DE 101 55 199 A1 ist ein Stand der Technik bekannt. Diese als eine Verschleißanzeige für einen Zugmitteltrieb bestimmte Einrichtung löst ein Signal aus, sobald eine Drehwinkeldifferenz zwischen zwei umlaufenden Wellen einen Grenzwert überschreitet. Die Einrichtung beschränkt sich darauf, eine Funktionsstörung zu erfassen und diese als ein Signal weiterzuleiten.

Die JP 62-180157 A wird als nächstliegender Stand der Technik angesehen.

### Zusammenfassung der Erfindung

Von dem bekannten Stand der Technik ausgehend, liegt der vorliegenden Erfindung die Aufgabe zu Grunde, die Funktion eines Zugmitteltriebs im Betriebszustand der Brennkraftmaschine zu überwachen, wobei eine Störung nicht gleich zum Stillstand der Brennkraftmaschine führt.

Erfindungsgemäß wird diese Aufgabenstellung durch die Merkmale des Ansprüche 1 gelöst.

Zur Lösung der zuvor genannten Aufgabe ist erfindungsgemäß zumindest ein Sensor, ein Messwertgeber vorgesehen, der eine Schwingwinkelabweichung, eine Verdrehwinkelabweichung, eine Drehzahlungleichförmigkeit oder eine Stellbewegung zwischen dem Abtriebsorgan und zumindest einem Antriebsorgan des Zugmitteltriebs erfasst. Einem rotierenden Bauteil des erfindungsgemäßen Zugmitteltriebs ist dazu ein Sensor oder ein Messwertgeber zugeordnet, der im Betriebszustand der Brennkraftmaschine Messwerte als ist-Werte einer elektronischen Steuerung zuleitet, die eine Auswerteeinheit oder eine Messwerteerfassung beinhaltet. Bevorzugt ist dem Abtriebsorgan und dem Antriebsorgan jeweils ein Sensor zugeordnet. Damit kann beispielsweise eine Schwingwinkelabweichung oder eine Verdrehwinkelabweichung der Nockenwelle erfasst werden. Der Sensor überträgt als ein Signal, die erfassten ist-Werte auf die elektronische Steuerung der Brennkraftmaschine. Die Steuerung bzw. das Steuergerät berechnet durch einen Abgleich zwischen Ist-Werten und Soll-Werten eine Stellgröße, sobald ein definierter Grenzwert überschritten ist. Die Steuerung erfolgt indem aus der einer Schwingwinkelabweichung oder einer Abweichung der Drehzahlungleichförmigkeit in bezug auf einen Sollwert eine Steuergröße gebildet wird. Das Steuergerät kann anschließend ein Notprogramm einleiten, mit dem die Brennkraftmaschine, beispielsweise in einem Teillastbetrieb in Verbindung einer Drehzahlbegrenzung weiter betrieben werden kann. Dazu ist dem Stellglied vorzugsweise ein Aktor, ein Aktuator bzw. ein Stellglied zugeordnet, mit dem die Stellgröße des Steuergerätes in eine Handlung umsetzbar ist, d.h. in dem Steuergerät der Brennkraftmaschine erfolgt ein Abgleich mit Sollwerten und einer anschließenden Übertragung des Ergebnisses auf ein Stellglied.

Vorteilhaft sind die Sollwerte in der elektronischen Steuereinheit so definiert, dass die erfindungsgemäße Einrichtung bereits einen sich abzeichnenden Ausfall eines Bauteils des Zugmitteltriebs erfasst und verdeutlicht. Damit kann ein Defekt bereits in einem Frühstadium erkannt und ein Notbetrieb eingeleitet werden, der Folgeschäden, einen Stillstand und völligen Ausfall der Brennkraftmaschine vermeidet.

Die erfindungsgemäße Einrichtung ermöglicht, dass ein Fahrzeug an dessen Brennkraftmaschine eine Funktionsstörung an einem Organ oder einem Aggregat des Zugmitteltriebs aufgetreten ist, ohne fremde Hilfe die Werkstatt erreichen kann.

Weitere vorteilhafte Ausgestaltungen sind Gegenstand der abhängigen Ansprüche 2 bis 15.

Die Erfindung sieht vor, einem Abtriebsorgan oder einem Antriebsorgan des als Synchrontrieb ausgelegten Zugmitteltriebs eine Freilaufkupplung zuzuordnen, wobei die erfindungsgemäße Einrichtung die Funktion der Freilaufkupplung im Betriebszustand der Brennkraftmaschine überwacht. Das Funktionsprinzip der Freilaufkupplung gewährleistet ausschließlich bei einer beschleunigten Winkelgeschwindigkeit den Antrieb und entkoppelt andererseits bei einer Verzögerung, einer Eigenverzögerung des Antriebsaggregates, die kleiner ist als die des Zugmitteltriebs, deren Zugmittel über das Abtriebsorgan mit der Brennkraftmaschine verbunden ist. Damit wird insbesondere bei Aggregaten mit einer großen Drehmasse eine nachteilige oszillierende Bewegung, hervorgerufen durch die Drehungleichförmigkeit der Brennkraftmaschine, verhindert, die sich insbesondere nachteilig auf die Lebensdauer des Zugmittels auswirkt.

Basis bzw. Grundlage der Funktionsprüfung ist dabei die Rückwirkung der Freilaufkupplung auf deren Antriebswelle. Bei einer blockierten Freilaufkupplung stellt sich eine größere, in den Zugmitteltrieb eingeleitete Drehzahlungleichförmigkeit ein. Damit erhöht sich die Schwingwinkelabweichung, verbunden mit eine stärker beanspruchten Spannvorrichtung des Zugmitteltriebs. Der Schwingwinkel oder der Verdrehwinkel wird mittels eines Messwertgebers bestimmt, der eine Winkellage, d.h. Winkelabweichung und / oder eine Drehzahlabweichung des betreffenden Abtriebsorgans oder Antriebsorgans erfasst und als ein Messwert der Steuerung der Brennkraftmaschine zuführt. Vorteilhaft kann mit Hilfe von Sensoren, die der Freilaufkupplung zugeordnet sind, eine Relativbewegung zwischen einem Innenring und einem Außenring der Freilaufkupplung erfasst und als Signal der elektronischen Steuerung übertragen werden. Bei Überschreitung vorgegebener Grenzwerte kann ein Notprogramm ausgelöst werden, in dem die Brennkraftmaschine trotz defekter oder ausgefallener Freilaufkupplung zumindest zeitlich begrenzt betrieben werden kann.

Die erfindungsgemäße Einrichtung sieht vor, dass bei einer Überschreitung eines als Grenzwert definierten Ist-Wertes, der auf eine defekte Freilaufkupplung hinweist, die Steuerung selbsttätig in ein Notprogramm übergeht. Diese Maßnahme ermöglicht den Betrieb der Brennkraftmaschine auf einem geringeren Leistungsniveau und trotz defekter Freilaufkupplung eine Benutzung des Fahrzeugs.

Das Zugmittel des erfindungsgemäßen Zugmitteltriebs ist zur Bildung eines Koppeltriebs mit einer Laufscheibe, insbesondere einer Riemenscheibe, eines weiteren als Steuertrieb bestimmten Zugmitteltriebs der Brennkraftmaschine verbunden. Dem zum Antrieb der Nockenwelle der Brennkraftmaschine bestimmte Steuertrieb, ist erfindungsgemäß ein weiterer Zugmitteltrieb nachgeschaltet. Die erfindungsgemäße Einrichtung ist übertragbar auf den Koppeltrieb, bei dem ein Zugmittel des nachgeordneten Zugmitteltriebs mit einer Laufscheibe des als Steuertrieb ausgelegten Zugmitteltriebs der Brennkraftmaschine verbunden ist. Ein solcher nachgeordneter Zugmitteltrieb steht beispielsweise mit dem Nockenwellen-Antriebsrad des Steuertriebs in Verbindung und dient beispielsweise für Brennkraftmaschinen, bei denen die Zylinder V-förmig angeordnet sind, zum Antrieb von Aggregaten, die zwischen den Zylindern der Brennkraftmaschine angeordnet sind.

Vorteilhaft ist die Brennkraftmaschine mit Drehzahlsensoren versehen, die bevorzugt der Kurbelwelle und der Nockenwelle zugeordnet sind. Diese Sensoren in Verbindung mit einer elektronischen Steuerung bzw. einem Steuergerät, dem Motormanagement, ermöglichen beispielsweise den Zündzeitpunkt, den Einspritzbeginn und/oder eine Nockenwellenverstellung der Brennkraftmaschine zu überwachen und zu regeln. Die Steuerung erfasst dabei Unregelmäßigkeiten der Schwingwinkelabweichung, der Verdrehwinkelabweichung oder der Drehzahlungleichförmigkeit, die sich außerhalb einer vorgegebenen Toleranz einstellen.

Abweichungen von Vorgabewerten stellen sich bei Funktionsstörungen von Aggregaten des Synchrontriebs ein, wie beispielsweise einem Defekt der Spannvorrichtung, der Gleitschiene, der Umlenkrolle, der Wasserpumpe, des Ventiltriebs, oder des Nockenwellenverstellers.

Die erfindungsgemäße Steuerung ist vorteilhaft so ausgelegt, dass bei Toleranzüberschreitungen von statischen und/oder dynamischen Verdrehwinkeln oder Schwingwinkeln ein Notprogramm greift. Dabei wird die Brennkraftmaschine beispielsweise in Teillast und / oder bei verminderter Drehzahl betrieben. Außerdem kann die Steuerung beispielsweise bei einem größeren Defekt eines Bauteils einen Stillstand der Brennkraftmaschine auslösen.

Eine weitere Ausgestaltung der Erfindung bezieht sich auf einen Zugmitteltrieb, der den Antrieb einer Kraftstoffpumpe einschließt. Beispielsweise eignet sich der zuvor beschriebene Koppeltrieb zum Antrieb einer Kraftstoffeinspritzpumpe für Ottomotoren bzw. einer Hochdruckpumpe für Common-Rail-Dieselmotoren, wobei vorteilhaft die Lauf- oder Riemenscheibe der Kraftstoffpumpe eine Freilaufkupplung einschließt. Alternativ schließt die Erfindung ein, die Freilaufkupplung abtriebsseitig, d.h. in die Lauf- oder Riemenscheibe der Abtriebsseite, der Nockenwelle zu integrieren. Bei einer unzulässigen Schwingwinkelabweichung, Drehzahlungleichförmigkeit und/oder Verdrehwinkelabweichung zwischen dem Abtriebsorgan und der Kraftstoffpumpe wird erfindungsgemäß das Notprogramm eingeleitet, mit dem beispielsweise die Brennkraftmaschine im Teillastbetrieb für eine begrenzte Zeit weiter betrieben werden kann. Das Notprogramm vermeidet den Volllastbetrieb und verhindert damit wirksam Folgeschäden aufgrund einer fehlerhaften Freilaufkupplung in dem Antriebsorgan, der Riemenscheibe der Kraftstoffeinspritzpumpe.

Mit Hilfe einer entsprechenden Software ist die Steuerung in der Lage, in ein Notprogramm einzutreten, das eine Kraftstoffregelvariante vorsieht, bei der das Druckregelventil beaufschlagt wird und damit die ausgelösten Wechseldrehmomente deutlich verringert werden. Diese Maßnahme ist insbesondere für Hochdruckpumpen von Vorteil, die für Common-Rail-Diesel-Brennkraftmaschinen eingesetzt werden.

Vorteilhaft ist die Freilaufkupplung in einer Laufscheibe bzw. in einer Riemenscheibe zwischen einem drehstarr mit einer Pumpenwelle der Einspritzpumpe verbundenen Innenring und einem die Freilaufkupplung umschließenden Außenring eingesetzt. Zur Erfassung einer Relativbewegung zwischen dem Innenring oder Nabe und einem Außenring oder Gehäuse sind der Freilaufkupplung Sensoren zugeordnet, die Relativbewegungen als Signal der elektronischen Steuerung übertragen.

Alternativ zur Erzielung eines geschützten Einbaus der Freilaufkupplung bietet es sich an, diese innerhalb des Pumpengehäuses, beispielsweise zwischen zwei Wellenzapfen der Hochdruckpumpe anzuordnen. Dazu greift ein erster Wellenzapfen spielbehaftet in eine topfartige Aufnahme des zweiten Wellenzapfens, wobei die Freilaufkupplung in einen sich einstellenden Ringspalt zwischen dem Wellenzapfen und der Aufnahme eingesetzt ist.

Die Erfindung schließt alle Bauformen von Freilaufkupplungen ein, die bevorzugt den Laufscheiben bzw. Riemenscheiben des Abtriebsorgans oder den Antriebsorganen zugeordnet sind. Als Freilaufkupplung ist bevorzugt ein Klemmkörperfreilauf oder ein Klemmrollenfreilauf einsetzbar. Alternativ eignen sich außerdem ein Hülsenfreilauf oder ein Schlingbandfreilauf.

Vorteilhaft schließt die erfindungsgemäße Einrichtung einen Sensor ein, der kompakt gestaltet, eine exakte Messung vornimmt. Dazu ist der Sensor beispielsweise in die Laufscheibe bzw. Riemenscheibe des Abtriebsorgans oder des Antriebsorgans eingesetzt oder diesem Organ zugeordnet und erfasst als Messwert, die Relativbewegung der sich zueinander bewegenden Bauteile der Freilaufkupplung. Gleichzeitig kann damit die Funktion der Freilaufkupplung überwacht werden. Eine große Drehzahldifferenz der Bauteile zwischen denen die Freilaufkupplung eingesetzt ist kann als Indiz für ein Durchrutschen und eine übereinstimmende Drehzahl auf eine Blockieren gewertet werden. Als Sensor eignet sich bevorzugt ein berührungslos wirkender Sensor oder Messwertgeber, beispielsweise ein Hallsensor oder ein induktiver Drehzahlsensor.

Die erfindungsgemäße Einrichtung, ermöglicht weiterhin beispielsweise die Funktion der Wasserpumpe, der Spannvorrichtung, der Gleitschiene, des Nockenwellenverstellers und des Zugmittels, d.h. aller Organe oder Bauteile zu überwachen, die mit dem Zugmitteltrieb in Verbindung stehen.

Parallel zu einem von der Steuerung der Brennkraftmaschine ausgelösten Notprogramm, aufgrund einer Überschreitung einer maximalen Schwingwinkelabweichung oder Drehzahlabweichung zwischen dem Abtriebsorgan und dem Antriebsorgan ist erfindungsgemäß vorgesehen, dass die Steuerung ein akustisches oder optisches Signal auslöst. Dieses Signal verdeutlicht beispielsweise dem Fahrer des Fahrzeugs, dass ein Defekt im Antrieb der Kraftstoffeinspritzpumpe aufgetreten ist und daher die Brennkraftmaschine in einen Notbetrieb übergeht. Der einen Volllastbetrieb der Brennkraftmaschine unterbindende Notbetrieb, ermöglicht trotz des aufgetretenen Schadens mit dem Fahrzeug die nächste Werkstatt zu erreichen.

Mit dem von dem Steuergerät ausgelösten akustischen oder optischen Signal erhält der Fahrer des Fahrzeugs unmittelbar den Hinweis auf eine Funktionsstörung. Dazu bietet es sich an mehrere unterschiedliche Signale vorzusehen, die jeweils einem Aggregat zugeordnet sind, wodurch der Fahrer beispielsweise anhand des Signals, das fehlerhafte Aggregat erkennt und folglich unmittelbar seine Fahrweise bzw. sein Fahrziel darauf abstimmen kann.

Weiterhin sieht die erfindungsgemäße Einrichtung vor, die Steuerung mit einem Fehlerspeicher zu versehen. Diese softwareseitige Maßnahme ermöglicht dem Werkstattpersonal bei der Wartung mit Hilfe eines Diagnosegerätes beispielsweise die Wirkungsweise und den Zustand der Freilaufkupplung zu bestimmen. Der Fehlerspeicher ist vorteilhaft so ausgelegt, dass dieser sowohl die grenzwertüberschreitenden Messwerte erfasst als auch Messwerte, die einem dem Grenzwert vorgelagerten Toleranzfeld entsprechen. Derartige Messwerte deuten auf einen baldigen Ausfall eines Organs oder Bauteil des Zugmitteltriebs hin, beispielsweise einer Freilaufkupplung. Damit kann ein sich abzeichnender Ausfall der Freilaufkupplung erkannt und durch einen vorzeitigen Austausch weitere Folgeschäden bzw. ein außerplanmäßiger Werkstattaufenthalt vermieden werden.

Bevorzugt ist die erfindungsgemäße Einrichtung so ausgelegt, dass ein Abgleich zwischen den Istwerten und den Sollwerten in der elektronischen Steuerung bei betriebswarmer Brennkraftmaschine erfolgt. Vorzugsweise berücksichtigt die Steuerung eine Anfangslängung des Zahnriemens, in dem bei einer Inbetriebnahme oder einem Austausch des Zahnriemens die Steuerung den Abgleich zwischen Istwerten und Sollwerten nach einer vorwählbaren Betriebsdauer beginnt.

Die erfindungsgemäße Einrichtung sieht weiterhin vor, im Betriebszustand der Brennkraftmaschine kontinuierlich einen Messwertabgleich zwischen dem Abtriebsorgan und dem Antriebsorgan zur Ermittlung des Verdrehwinkels vorzunehmen. Diese Maßnahme gewährleistet bereits im Frühstadium eines sich abzeichnenden Ausfalls, beispielsweise der Freilaufkupplung, die Einleitung eines Notprogramms, zur Verhinderung von Folgeschäden.

Die erfindungsgemäße Einrichtung eignet sich für alle heute an Brennkraftmaschinen eingesetzten Zugmittel wie, insbesondere Zahnriemen, Flachriemen oder Ketten. Die erfindungsgemäße Einrichtung, die für einen als Synchrontrieb ausgelegten Zugmitteltriebe bestimmt ist umfasst weiterhin eine Spannvorrichtung, die im Bereich eines Leertrums an dem Zugmittel kraftschlüssig abgestützt ist.

Erfindungsgemäß ist die Einrichtung außerdem kombinierbar mit einem Zugmitteltrieb, ohne separate Spannvorrichtung. Dazu ist vorzugsweise ein Antriebsorgan schwenkbar, gegen ein Federmittel an dem Zugmittel abgestützt. Beispielsweise eignet sich dazu eine schwenkbare Hochdruckpumpe, die damit gleichzeitig die Funktion der Spannvorrichtung übernimmt.

Außerdem kann die erfindungsgemäße Einrichtung für Zugmitteltriebe von Brennkraftmaschinen vorgesehen werden, mit einem zugmittel- bzw. riemengetriebenen Startergenerator, der die Funktion eines Starters und eines Generators übernimmt. Abhängig von dem Betriebszustand erfolgt im Startmodus der Antrieb von dem Startergenerator auf die Brennkraftmaschine und im Betriebsmodus werden die mit dem Zugmitteltrieb in Verbindung stehenden Organe bzw. Aggregate von der Brennkraftmaschine angetrieben.

### Kurze Beschreibung der Zeichnungen

Ein bevorzugtes Ausführungsbeispiel der Erfindung ist in drei Figuren dargestellt. Es zeigen:
- Figur 1: den schematischen Aufbau eines als Steuertrieb ausgeleg- ten Zugmitteltriebs einer Brennkraftmaschine, dem als Koppeltrieb ein weiterer Zugmitteltrieb zugeordnet ist;
- Figur 2: den nachgeordneten als Koppeltrieb ausgelegten Zugmit- teltrieb gemäß Figur 1;
- Figur 3: in einer Schnittdarstellung die Ansicht III-III gemäß Figur 2, die eine Freilaufkupplung im eingebauten Zustand dar- stellt;

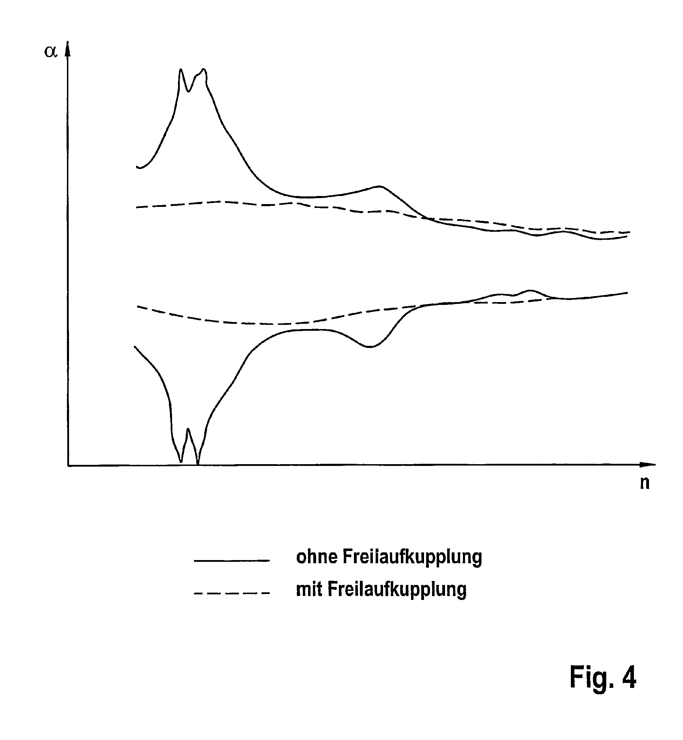

- Figur 4: ein Diagramm, indem eine Verdrehwinkelabweichung eines Organs mit und ohne Freilaufkupplung dargestellt ist.

### Detaillierte Beschreibung der Zeichnungen

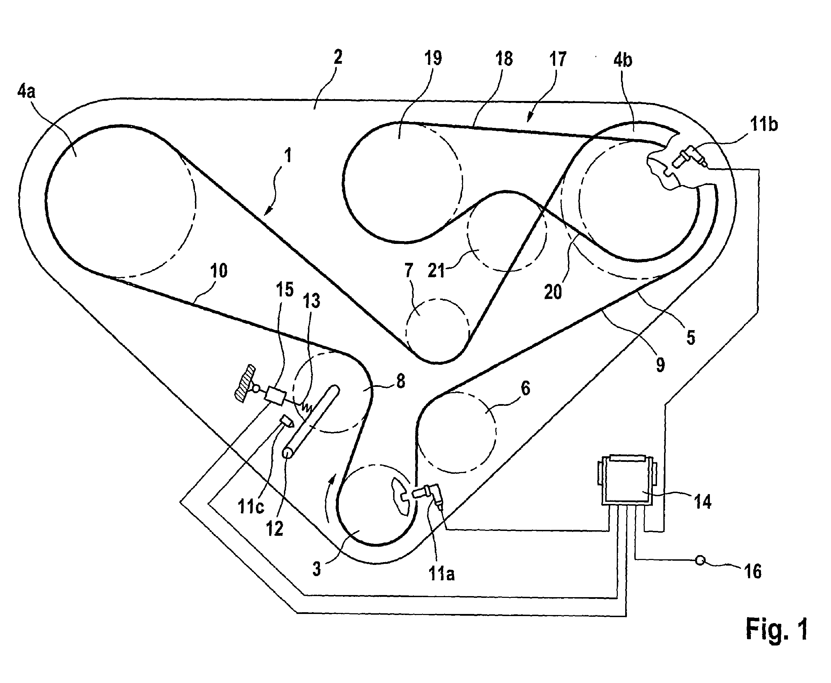

Die Figur 1 verdeutlicht den Aufbau eines als Synchrontrieb ausgelegten Zugmitteltriebs 1 einer Brennkraftmaschine 2. Der Steuertrieb 1 dient insbesondere zum Antrieb von zwei V-förmig zu einem Abtriebsorgan 3 angeordneten Antriebsorganen 4a, 4b. Das Abtriebsorgan 3 wird gebildet durch eine drehstarr mit einer Kurbelwelle der Brennkraftmaschine 2 verbundene Riemenscheibe, die über ein Zugmittel 5, insbesondere einem Zahnriemen, mit den Antriebsorganen 4a, 4b verbunden ist, welche Riemenscheiben darstellen, die jeweils mit einer Nockenwelle verbunden sind, zur Betätigung von Gaswechselventilen der Brennkraftmaschine 2. Der zum Antrieb der Nockenwellen bestimmte Zugmitteltrieb 1 wird als Steuertrieb bezeichnet. Zur Erzielung definierter Umschlingungswinkel des Zugmittels 5 sind dem Zugmitteltrieb 1 zwischen dem Abtriebsorgan 3 und dem Antriebsorgan 4b eine erste Umlenkrolle 6 zugeordnet. Eine zweite Umlenkrolle 7 oder alternativ eine Wasserpumpe stützt sich an dem Zugmittel 5 zwischen den Antriebsorganen 4a und 4b ab, wobei zur Vergrößerung des Umschlingungswinkels die Umlenkrolle 7 in Richtung des Abtriebsorgans 3 zwischen den Nockenwellen angeordnet ist. Übereinstimmend sind die Umlenkrollen 6, 7 jeweils einem Zugtrum 9 des Zugmittels 5 zugeordnet. Der in Pfeilrichtung, d. h. im Uhrzeigersinn umlaufende Zugmitteltrieb 1 umfasst weiterhin eine Spannvorrichtung 8, die einem Leertrum 10 des Zugmittels 5, d. h. zwischen dem Abtriebsorgan 3 und dem Antriebsorgan 4a unterstützt durch ein Federelement 13 kraftschlüssig an dem Zugmittel 5 abgestützt ist.

Dem Abtriebsorgan 3 und dem Antriebsorgan 4b des Zugmitteltriebs 1 sind Sensoren 11 a, 11 b zugeordnet, die beispielsweise periodisch einem Steuergerät, einer Steuerung 14, Signale übertragen. In dem Steuergerät 14 erfolgt zwischen den Ist- bzw. Eingangswerten ein Abgleich mit Vorgabe- oder Sollwerten. Bei einer Überschreitung eines Grenzwertes wird von dem Steuergerät 14 ausgehend, das Motormanagement oder ein Aktuator angesteuert, um ein Notprogramm der Brennkraftmaschine einzuleiten.

Weiterhin bietet es sich an, in Verbindung mit der Steuerung 14 die Funktion der Spannvorrichtung 8 zu überwachen. Dazu ist an der Brennkraftmaschine ein Sensor 11 c angeordnet, der Stellbewegungen der um eine Drehachse 12 schwenkbaren Spannvorrichtung 8 erfasst und mittels eines Signals der Steuerung 14 übertragt. Aus dem Ist-Wert, dem Signal des Sensors 11 c, berechnet die Steuerung 14 in Verbindung mit definierten Soll-Werten eine elektrische Stellgröße, die beispielsweise von einem Aktuator 15 umsetzbar ist, der mit dem Federelement 13 der Spannvorrichtung 8 in Verbindung steht. Diese Maßnahme ermöglicht beispielsweise eine selbsttätige Nachstellung der Spannvorrichtung 8 bei einer unzulässigen Längung des Zugmittels 5, aufgrund einer Alterung.

Die Steuerung 14 ist weiterhin mit einer Kontrollleuchte 16 verbunden, die vorzugsweise im Fahrgastraum des Fahrzeugs angeordnet, dem Fahrer das eingeleitete Notprogramm der Brennkraftmaschine oder die nachgeführte Position der Spannvorrichtung 8 verdeutlicht und gleichzeitig auf einen notwendigen Austausch des Zugmittels 5 hinweist.

Der als Synchrontrieb ausgelegte, als Steuertrieb zu bezeichnende Zugmitteltrieb 1 bildet mit einem zweiten nachgeschalteten Zugmitteltrieb 17 einen Koppeltrieb. Dazu übernimmt die Laufscheibe 22, das Antriebsorgan 4b des Zugmitteltriebs 1 die Funktion eines Abtriebsorgans für den Zugmitteltrieb 17. Das Zugmittel 18 verbindet das Abtriebsorgan, die mit der Nockenwelle verbundene Laufscheibe 22 mit einem Antriebsorgan 19. Zur Erzielung einer ausreichenden Vorspannung des Zugmittels 18 ist diesem im Leertrum 20 eine Spannvorrichtung 21 zugeordnet. Als Antriebsorgan 19 ist bevorzugt eine Hochdruckpumpe bzw. Common-Rail-Pumpe für eine Diesel-Brennkraftmaschine vorgesehen. Die zwischen den V-förmig angeordneten Zylindern der Brennkraftmaschine 2 plazierte Hochdruckpumpe, das Antriebsorgan 19, ermöglicht eine optimale bauraumoptimierte Einbaulage und weiterhin kurze Verbindungsleitungen zu Hochdruckdieselleitungen, die jeder Zylinderreihe der Brennkraftmaschine 2 zugeordnet sind.

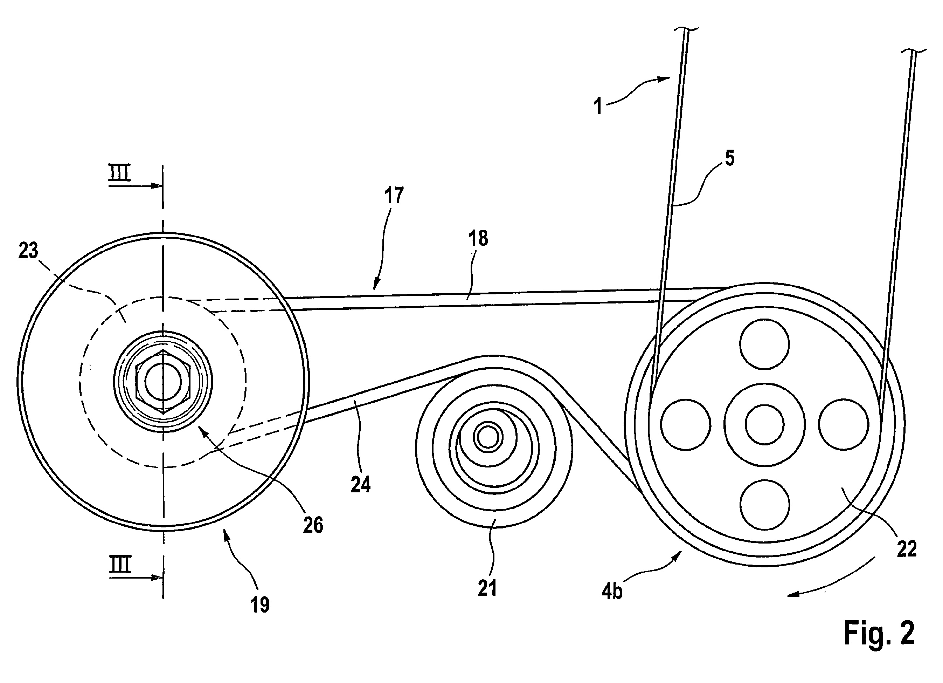

Die Figur 2 zeigt in einer vergrößerten Darstellung den Zugmitteltrieb 17, der mit dem Zugmitteltrieb 1 einen Koppeltrieb bildet. Dazu bildet die für den Zugmitteltrieb 1 als Antriebsorgan 4b bestimmte, drehstarr mit der Nockenwelle der Brennkraftmaschine 2 verbundene Laufscheibe 22 für den Zugmitteltrieb 17 ein Abtriebsorgan. Das Zugmittel 18 verbindet die Laufscheibe 22 der Nockenwelle mit der Laufscheibe 23, welche dem als Diesel-Hochdruckpumpe ausgelegten Antriebsorgan 19, zugeordnet ist. Zur Erzielung einer ausreichenden Vorspannung des Zugmittels 18 ist an dem Leertrum 24 eine, einen Exzenter einschließende Spannvorrichtung 21 kraftschlüssig abgestützt. Der Zugmitteltrieb 17 ist wie in Figur 1 dargestellt, dem Zugmitteltrieb 1 nachgeordnet. Eine in der Laufscheibe 23 des Antriebsorgans 19 integrierte Freilaufkupplung 26 vermeidet eine nachteilige Übertragung einer Drehungleichförmigkeit aus der Hochdruckpumpe, zurück auf die mit der Nockenwelle in Verbindung stehende Laufscheibe 22.

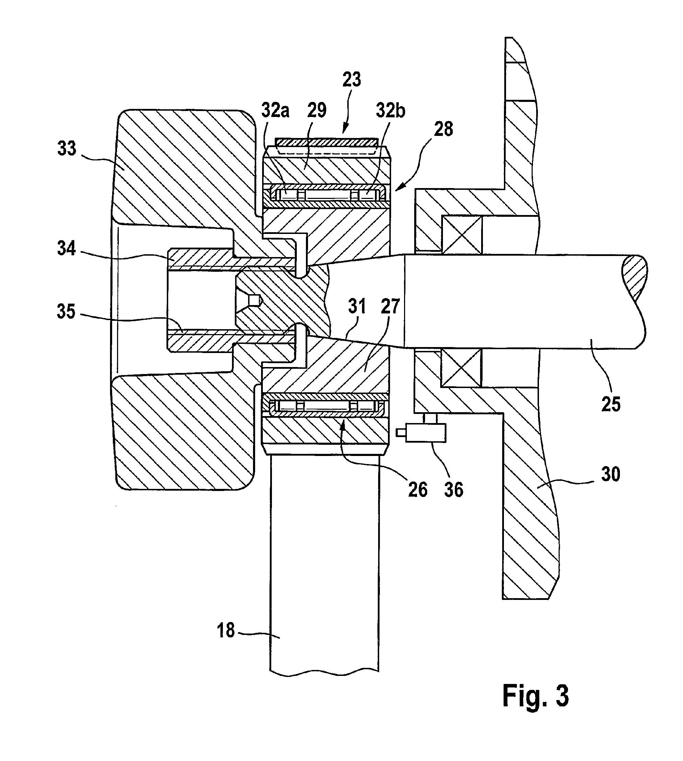

Den Aufbau des Antriebsorgans 19, insbesondere die Einbaulage der Freilaufkupplung 26 innerhalb der Laufscheibe 23 verdeutlicht die Figur 3. Die Laufscheibe 23 umfasst einen drehstarr mit einer Pumpenwelle 25 verbundenen Innenring 27, der radial beabstandet, unter Bildung eines kreisringförmigen Einbauraums 28, von einem Außenring 29 umschlossen ist. Die in einem Gehäuse 30 einer Hochdruckpumpe wälzgelagerte Pumpenwelle 25 ist dabei über einen als Konusverband 31 ausgebildeten Presssitz mit der Laufscheibe 23 verbunden. Der Einbauraum 28 dient zur Aufnahme der Freilaufkupplung 26, der beidseitig jeweils ein Wälzlager 32a, 32b zugeordnet ist. Von dem Gehäuse 30 ausgehend betrachtet ist der Laufscheibe 23 eine Schwungmasse 33 vorgelagert, die mittels einer Schraubenmutter 34 befestigt ist. Die auf einem endseitigen Gewindeabschnitt 35 der Pumpenwelle 25 verschraubte Schraubenmutter 34 übt über eine Schulter der Schwungmasse 33 eine Axialkraft auf den Konusverband 31 aus.

Ein ortsfest an dem Gehäuse 30 lagepositionierter Sensor 36 ist dem Außenring 29 der Laufscheibe 23 zugeordnet. Damit kann beispielsweise bei einer defekten Freilaufkupplung 26 eine Winkelabweichung als Signal der in Figur 1 abgebildeten Steuerung 1 übertragen werden, wobei nach Überschreitung eines Grenzwertes ein Notprogramm eingeleitet werden kann. Dazu ist die Steuerung 14 bzw. das Steuergerät mit dem elektronischen Steuermanagement der Brennkraftmaschine 2 derart verbunden, dass im Notprogramm beispielsweise eine Volllast der Brennkraftmaschine 2 unterbunden ist bzw. eine Drehzahlgrenze nicht überschritten werden kann. Diese Maßnahme ermöglicht auch bei einer defekten Freilaufkupplung 26 die Brennkraftmaschine 2 zumindest im Teillastbetrieb weiter betreiben zu können, damit das Fahrzeug ohne fremde Hilfe eine Werkstatt erreichen kann.

Die Figur 3 verdeutlicht die Wirkungsweise der Freilaufkupplung 26, die gemäß Figur 2 in dem Antriebsorgan 19 integriert ist. In dem Diagramm ist der Ordinate die Schwingwinkel- oder Verdrehwinkelabweichung "α" und der Abszisse die Drehzahl "n" zugeordnet. Mittels der Freilaufkupplung 26 wird die Verdrehwinkelabweichung "α" über das gesamte Drehzahlspektrum auf ein nahezu konstantes Niveau reduziert. Aus dem Diagramm wird weiterhin deutlich, dass die Freilaufkupplung 26 insbesondere extreme Winkelabweichungen in einem niedrigen Drehzahlbereich weitestgehend kompensiert.

### Bezugszahlen

- 1: Zugmitteltrieb
- 2: Brennkraftmaschine
- 3: Abtriebsorgan
- 4a: Antriebsorgan
- 4b: Antriebsorgan
- 5: Zugmittel
- 6: Umlenkrolle
- 7: Umlenkrolle
- 8: Spannvorrichtung
- 9: Zugtrum
- 10: Leertrum
- 11a: Sensor
- 11 b: Sensor
- 11 c: Sensor
- 12: Drehachse
- 13: Federelement
- 14: Steuerung
- 15: Aktuator
- 16: Kontrollleuchte
- 17: Zugmitteltrieb
- 18: Zugmittel
- 19: Antriebsorgan
- 20: Leertrum
- 21: Spannvorrichtung
- 22: Laufscheibe
- 23: Laufscheibe
- 24: Leertrum
- 25: Pumpenwelle
- 26: Freilaufkupplung
- 27: Innenring
- 28: Einbauraum
- 29: Außenring
- 30: Gehäuse
- 31: Konusverband
- 32a: Wälzlager
- 32b: Wälzlager
- 33: Schwungmasse
- 34: Schraubenmutter
- 35: Gewindeabschnitt
- 36: Sensor

## Patentansprüche

1. Einrichtung mit einem als Synchrontrieb ausgelegten Zugmitteltrieb (1, 17) einer Brennkraftmaschine (2), mit der ein Verdrehwinkel zwischen einem Abtriebsorgan (3) und einem Antriebsorgan (4a, 4b; 19) erfasst werden kann, wobei ein Organ des Zugmitteltriebs (1, 17) mit einer elektronischen Steuerung (14) oder einem Steuergerät der Brennkraftmaschine (2) zusammenwirkt, wobei ein Sensor (11a, 11b, 36), ein Messwertgeber, eine Schwingwinkelabweichung, eine Verdrehwinkelabweichung, eine Drehzahlungleichförmigkeit oder eine Stellbewegung zwischen dem Abtriebsorgan (3) und einem Antriebsorgan (4a, 4b; 19) als ein Signal erfasst und der Steuerung (14) zuführt, die eine Stellgröße berechnet, wobei nach Überschreitung eines definierten Grenzwertes die Steuerung (14), insbesondere mittels eines Aktuators (15) ein Notprogramm der Brennkraftmaschine einleitet,
**dadurch gekennzeichnet, dass** ein dem Abtriebsorgan (3) oder dem Antriebsorgan (4a, 4b; 19) zugeordnete Freilaufkupplung (26) bei einer beschleunigten Winkelgeschwindigkeit des Zugmitteltriebs (1, 17) einen Antrieb sicherstellt, wobei ein Fehlerspeicher vorgesehen ist, der so ausgelegt ist, dass dieser sowohl die grenzwertüberschreitenden Messwerte erfasst als auch Messwerte, die einem dem Grenzwert vorgelagerten To- leranzfeld entsprechen wodurch eine sich abzeichnender Ausfall der Freilaufkupplung erkannt wird.

2. Einrichtung nach Anspruch 1, bei der zur Bildung eines Koppeltriebs, ein Zugmittel (18) des Zugmitteltriebs (17) mit einer Laufscheibe (22) eines als Steuertrieb ausgelegten Zugmitteltriebs (1) der Brennkraftmaschine (2) verbunden ist.

3. Einrichtung nach Anspruch 2, wobei der Zugmitteltrieb (17) als Antriebsorgan (19) eine Kraftstoffpumpe einschließt, die in Verbindung mit dem Sensor (36), der Steuerung (14) und der Freilaufkupplung (26) bei einer Funktionsstörung der Kraftstoffpumpe einen Volllastbetrieb der Brennkraftmaschine (2) unterbindet.

4. Einrichtung nach Anspruch 2, wobei die Freilaufkupplung (26) in einer Laufscheibe (23) zwischen einem drehstarr mit einer Pumpenwelle (25) verbundenen Innenring (27) und einem Außenring (29) der Laufscheibe (23) angeordnet ist.

5. Einrichtung nach Anspruch 3, bei der die Freilaufkupplung (26) innerhalb eines Gehäuses (30) der Kraftstoffpumpe eingesetzt, zwei Wellenzapfen der Hochdruckpumpe verbindet.

6. Einrichtung nach Anspruch 1, wobei als Freilaufkupplung (26) ein Klemmkörperfreilauf oder ein Klemmrollenfreilauf vorgesehen ist.

7. Einrichtung nach Anspruch 1, wobei der Sensor (11c) einem Aggregat des Zugmitteltriebs (1) zugeordnet ist, beispielsweise einer Spannvorrichtung (8), einem Nockenwellen-Versteller, einer Umlenkrolle (6) oder einer Wasserpumpe.

8. Einrichtung nach Anspruch 1, bei der nach Überschreitung einer als Grenzwert bezeichneten Schwingwinkelabweichung, Verdrehwinkelabweichung oder Drehzahlungleichförmigkeit, die Steuerung (14) ein akustisches und/oder optisches Signal auslöst.

9. Einrichtung nach Anspruch 1, wobei in einem Fehlerspeicher der Steuerung (14) sowohl Messwerte abgelegt werden, die einen Grenzwert überschreiten als auch Meßwerte, die einem den Grenzwert vorgelagerten Toleranzfeld entsprechen.

10. Einrichtung nach Anspruch 1, die bei betriebswarmer Brennkraftmaschine die Messung der Verdrehwinkelabweichung zwischen dem Antriebsorgan und dem Abtriebsorgan vornimmt.

11. Einrichtung nach Anspruch 1, mit der im Betriebszustand der Brennkraftmaschine (2) in Verbindung mit zumindest einem Sensor (11 a bis 11 c, 36) und der Steuerung (14) ein kontinuierlicher Abgleich von Messwerten erfolgt, zur Bestimmung einer Schwingwinkelabweichung, einer Drehzahlungleichförmigkeit oder einer Verdrehwinkelabweichung zwischen dem Abtriebsorgan (3) und dem Antriebsorgan (4a, 4b; 19).

12. Einrichtung nach Anspruch 1, bei der ein Zahnriemen als Zugmittel (5, 18) für den Zugmitteltrieb (1, 17) vorgesehen ist.

13. Einrichtung, nach Anspruch 1, wobei die Spannvorrichtung (8, 21) dem Leertrum (20, 24) des Zugmitteltriebs (1, 17) zugeordnet ist.

14. Einrichtung nach Anspruch 3, bei der die schwenkbare, gegen ein Federmittel abgestützte Kraftstoffpumpe gleichzeitig die Funktion der Spannvorrichtung (21) des Zugmitteltriebs (17) übernimmt.

15. Einrichtung nach Anspruch 1, wobei der Zugmitteltrieb (1) einen Startergenerator einschließt, mit dem in einem Startmodus die Brennkraftmaschine (2) gestartet wird und im Generatormodus die Brennkraftmaschine (2) den Zugmitteltrieb (1) antreibt.

## Claims

1. Device having a flexible drive (1, 17), configured as a synchronous drive, of an internal combustion engine (2), with which device a rotational angle can be detected between an output member (3) and a drive member (4a, 4b; 19), a member of the flexible drive (1, 17) interacting with an electronic controller (14) or a control unit of the internal combustion engine (2), a sensor (11a, 11b, 11c, 36), a measured value transmitter, detecting an oscillation angle deviation, a rotational angle deviation, an irregularity in the rotational speed or an adjusting movement between the output member (3) and a drive member (4a, 4b; 19) as a signal and feeding it to the controller (14) which calculates a manipulated variable, the controller (14) initiating an emergency program of the internal combustion engine, in particular by means of an actuator (15), after a defined limiting value has been exceeded, **characterized in that** a freewheeling clutch (26) which is assigned to the output member (3) or the drive member (4a, 4b; 19) ensures drive in the case of an accelerated angular velocity of the flexible drive (1, 17), a fault memory being provided which is designed in such a way that it records both the measured values which exceed the limiting value and measured values which correspond to a tolerance field upstream of the limiting value, as a result of which an imminent failure of the freewheeling clutch is detected.

2. Device according to Claim 1, in which, in order to form a coupler drive, a flexible drive element (18) of the flexible drive (17) is connected to a pulley (22) of a flexible drive (1), configured as a timing drive, of the internal combustion engine (2).

3. Device according to Claim 2, the flexible drive (17) incorporating, as a drive member (19), a fuel pump which prevents full load operation of the internal combustion engine (2) in conjunction with the sensor (36), the controller (14) and the freewheeling clutch (26) in the case of a functional disruption of the fuel pump.

4. Device according to Claim 2, the freewheeling clutch (26) being arranged in a pulley (23) between an inner ring (27) which is connected rigidly in terms of rotation to a pump shaft (25) and an outer ring (29) of the pulley (23).

5. Device according to Claim 3, in which the freewheeling clutch (26), utilized within a housing (30) of the fuel pump, connects two shaft journals of the high pressure pump.

6. Device according to Claim 1, a clamping body freewheel or a clamping roller freewheel being provided as a freewheeling clutch (26).

7. Device according to Claim 1, the sensor (11c) being assigned to an assembly of the flexible drive (1), for example a tensioning apparatus (8), a camshaft adjuster, a deflection roller (6) or a water pump.

8. Device according to Claim 1, in which the controller (14) triggers an acoustic and/or optical signal after an oscillation angle deviation, a rotational angle deviation or an irregularity in the rotational speed which is designated as a limiting value is exceeded.

9. Device according to Claim 1, both measured values which exceed a limiting value and measured values which correspond to a tolerance field located ahead of the limiting value being stored in a fault memory of the controller (14).

10. Device according to Claim 1, which device performs the measurement of the rotational angle deviation between the drive member and the output member when the internal combustion engine is operationally warm.

11. Device according to Claim 1, with which, in the operational state of the internal combustion engine (2) and in conjunction with at least one sensor (11a to 11c, 36) and the controller (14), measured values are compared continuously, in order to determine an oscillation angle deviation, an irregularity in the rotational speed or a rotational angle deviation between the output member (3) and the drive member (4a, 4b; 19).

12. Device according to Claim 1, in which a toothed belt is provided as the flexible drive element (5, 18) for the flexible drive (1, 17).

13. Device according to Claim 1, the tensioning apparatus (8, 21) being assigned to the empty run (20, 24) of the flexible drive (1, 17).

14. Device according to Claim 3, in which the pivotable fuel pump which is supported against a spring means at the same time assumes the function of the tensioning apparatus (21) of the flexible drive (17).

15. Device according to Claim 1, the flexible drive (1) including a starter generator, with which the internal combustion engine (2) is started in a start mode and the internal combustion engine (2) drives the flexible drive (1) in the generator mode.

## Revendications

1. Dispositif comprenant un entraînement à moyen de traction (1, 17) conçu sous forme d'entraînement synchrone d'un moteur à combustion interne (2), avec lequel un angle de rotation entre un organe de sortie (3) et un organe d'entraînement (4a, 4b 19) peut être détecté, un organe de l'entraînement à moyen de traction (1, 17) coopérant avec une commande électronique (14) ou un appareil de commande du moteur à combustion interne (2), un capteur (11a, 11b, 11c, 36) détectant un générateur de valeur de mesure, un écart d'angle d'oscillation, un écart d'angle de rotation, un défaut d'uniformité de régime ou un mouvement de réglage entre l'organe de sortie (3) et un organe d'entraînement (4a, 4b ; 19) en tant que signal, et l'acheminant à la commande (14), qui calcule une grandeur de réglage, et après dépassement d'une valeur limite définie, la commande (14), en particulier au moyen d'un actionneur (15), amorçant un programme de secours du moteur à combustion interne,
**caractérisé en ce qu'**un embrayage à roue libre (26) associé à l'organe de sortie (3) ou à l'organe d'entraînement (4a, 4b ; 19), dans le cas d'une vitesse angulaire accélérée de l'entraînement à moyen de traction (1, 17), garantit un entraînement, une mémoire d'erreur étant prévue, laquelle est conçue de telle sorte qu'elle détecte à la fois les valeurs de mesure dépassant la valeur limite ainsi que des valeurs de mesure qui correspondent à un champ de tolérance placé avant la valeur limite, de sorte qu'une panne imminente de l'embrayage à roue libre soit détectée.

2. Dispositif selon la revendication 1, dans lequel, pour la formation d'un entraînement par accouplement, un moyen de traction (18) de l'entraînement à moyen de traction (17) est connecté à un disque de butée (22) d'un entraînement à moyen de traction (1) du moteur à combustion interne (2) conçu sous forme d'entraînement de commande.

3. Dispositif selon la revendication 2, dans lequel l'entraînement à moyen de traction (17) inclut, en tant qu'organe d'entraînement (19), une pompe à carburant, qui, en liaison avec le capteur (36), la commande (14) et l'embrayage à roue libre (26), inhibe un fonctionnement à pleine charge du moteur à combustion interne (2) en cas de perturbation du fonctionnement de la pompe à carburant.

4. Dispositif selon la revendication 2, dans lequel l'embrayage à roue libre (26) est disposé dans un disque de butée (23) entre une bague interne (27) connectée de manière rigide en rotation à un arbre de la pompe (25), et une bague externe (29) du disque de butée (23).

5. Dispositif selon la revendication 3, dans lequel l'embrayage à roue libre (26) est inséré à l'intérieur d'un boîtier (30) de la pompe à carburant, et relie deux tourillons d'arbre de la pompe haute pression.

6. Dispositif selon la revendication 1, dans lequel on prévoit comme embrayage à roue libre (26) une roue libre à corps de blocage ou une roue libre à rouleau de blocage.

7. Dispositif selon la revendication 1, dans lequel le capteur (11c) est associé à un groupe de l'entraînement à moyen de traction (1), par exemple un dispositif de tensionnement (8), un dispositif de réglage d'arbre à cames, une poulie de renvoi (6) ou une pompe à eau.

8. Dispositif selon la revendication 1, dans lequel, en cas de dépassement d'un écart d'angle d'oscillation, d'un écart d'angle de rotation, ou d'un défaut d'uniformité de régime désigné par valeur limite, la commande (14) déclenche un signal acoustique et/ou optique.

9. Dispositif selon la revendication 1, dans lequel, dans une mémoire d'erreur de la commande (14), sont stockées des valeurs de mesure qui dépassent une valeur limite, ainsi que des valeurs de mesure qui correspondent à un champ de tolérance placé avant la valeur limite.

10. Dispositif selon la revendication 1, qui effectue la mesure de l'écart d'angle de rotation entre l'organe d'entraînement et l'organe de sortie lorsque le moteur à combustion interne est chaud.

11. Dispositif selon la revendication 1, avec lequel, dans l'état de fonctionnement du moteur à combustion interne (2) en liaison avec au moins un capteur (11a à 11c, 36) et la commande (14), une comparaison continue de valeurs de mesure a lieu, pour déterminer un écart d'angle d'oscillation, un défaut d'uniformité de régime ou un écart d'angle de rotation entre l'organe de sortie (3) et l'organe d'entraînement (4a, 4b ; 19).

12. Dispositif selon la revendication 1, dans lequel une courroie dentée est prévue en tant que moyen de traction (5, 18) pour l'entraînement à moyen de traction (1, 17).

13. Dispositif selon la revendication 1, dans lequel le dispositif de tensionnement (8, 21) est associé au tronçon vide (20, 24) de l'entraînement à moyen de traction (1, 17).

14. Dispositif selon la revendication 3, dans lequel la pompe à carburant pivotante, supportée contre un moyen de ressort, reprend simultanément la fonction du dispositif de tensionnement (21) de l'entraînement à moyen de traction (17).

15. Dispositif selon la revendication 1, dans lequel l'entraînement à moyen de traction (1) inclut un générateur-démarreur avec lequel, en mode de démarrage, le moteur à combustion interne (2) est démarré et, en mode de générateur, le moteur à combustion interne (2) entraîne l'entraînement à moyen de traction (1).
